# EUROPÄISCHE PATENTSCHRIFT

(11) **EP 0 882 955 B1**
(45) Veröffentlichungstag und Bekanntmachung des Hinweises auf die Patenterteilung: **06.04.2005**
(21) Anmeldenummer: 97109195.4
(22) Anmeldetag: 06.06.1997
(51) Int. Cl.: G01F 23/284

(54) **Mit Mikrowellen arbeitendes Füllstandsmessgerät**
Level measuring apparatus using microwaves
Dispositif de mesure de niveau utilisant des micro-ondes

(43) Veröffentlichungstag der Anmeldung: 09.12.1998
(73) Patentinhaber: Endress + Hauser GmbH + Co. KG., 79689 Maulburg (DE)
(72) Erfinder: Burger, Stefan, 79108 Freiburg (DE); Krüger, Jürgen, 79541 Lörrach (DE)

(56) Entgegenhaltungen:
- WO-A-93/12408
- DE-A- 4 241 910
- US-A- 5 065 124

## Beschreibung

Die Erfindung betrifft ein mit Mikrowellen arbeitendes Füllstandsmeßgerät.

Mit Mikrowellen arbeitende Füllstandsmeßgeräte werden in fast allen Industriezweigen, z.B. in der Chemie und der Lebensmittelindustrie, eingesetzt. Sie dienen üblicherweise dazu Füllstände in Behältern zu überwachen und/oder anzuzeigen.

Bei der Füllstandsmessung werden Mikrowellen mittels einer Antenne zur Oberfläche eines Füllguts gesendet und an der Oberfläche reflektierte Echowellen empfangen. Es wird eine die Echoamplituden als Funktion der Entfernung darstellende Echofunktion gebildet, aus der das wahrscheinliche Nutzecho und dessen Laufzeit bestimmt werden. Aus der Laufzeit wird der Abstand zwischen der Füllgut-Oberfläche und der Antenne bestimmt.

Es können alle bekannten verfahren angewendet werden, die es ermöglichen, verhältnismäßig kurze Entfernungen mittels reflektierter Mikrowellen zu messen. Die bekanntesten Beispiele sind das Pulsradar und das Frequenzmodulations-Dauerstrichradar (FMCW-Radar).

Beim Pulsradar werden periodisch kurze Mikrowellen-Sendeimpulse, im folgenden als Wellenpakete bezeichnet, gesendet, die von der Füllgut-Oberfläche reflektiert und nach einer abstandsabhängigen Laufzeit wieder empfangen werden. Die empfangene Signalamplitude als Funktion der Zeit stellt die Echofunktion dar. Jeder Wert dieser Echofunktion entspricht der Amplitude eines in einem bestimmten Abstand von der Antenne reflektierten Echos.

Beim FMCW-Verfahren wird eine kontinuierliche Mikrowelle gesendet, die periodisch linear frequenzmoduliert ist, beispielsweise nach einer Sägezahnfunktion. Die Frequenz des empfangenen Echosignals weist daher gegenüber der Augenblicksfrequenz, die das Sendesignal zum Zeitpunkt des Empfangs hat, eine Frequenzdifferenz auf, die von der Laufzeit des Echosignals abhängt. Die Frequenzdifferenz zwischen Sendesignal und Empfangssignal, die durch Mischung beider Signale und Auswertung des Fourierspektrums des Mischsignals gewonnen werden kann, entspricht somit dem Abstand der reflektierenden Fläche von der Antenne. Ferner entsprechen die Amplituden der Spektrallinien des durch Fouriertransformation gewonnenen Frequenzspektrums den Echoamplituden. Dieses Fourierspektrum stellt daher in diesem Fall die Echofunktion dar.

In der DE-A 42 41 910 ist ein mit Mikrowellen arbeitendes Füllstandsmeßgerät beschrieben welches umfaßt:
- einen Generator zur Erzeugung von Mikrowellen,
- mindestens eine Antenne zum Senden und Empfangen von Mikrowellen,
- eine Mikrowellenleitung,
   -- die vom Generator zur Antenne führt,
   -- die eine Signalleitung und mindestens eine Schirmleitung aufweist, und
eine Empfangs- und Auswerteeinheit, die aus den empfangenen Mikrowellen einen Füllstand bestimmt und die ein Ausgangssignal erzeugt, das dem Füllstand entspricht.

Aus sicherheitstechnischen Gründen ist es insb. beim Einsatz von Füllstandsmeßgeräten in Umgebungen in denen Explosionsgefahr besteht erforderlich eine galvanische Trennung zwischen dem Meßgerät und dem Prozeß, z.B. dem Innenraum eines Behälters, dessen Füllstand zu messen ist, anzubringen. Hierdurch wird eine Funkenbildung vermieden. Die Anforderungen, die an galvanische Trennungen in bestimmten Anwendungen gestellt werden, können von Land zu Land verschieden sein. Sie sind üblicherweise in Normen, z.B. der Europäischen Industrienorm EN 50020, angegeben.

Aus der EP 0 762 089 A2 ist ein Füllstandsmeßgerät bekannt, bei dem die elektronische Schaltung in einem gasdichten Bereich angeordnet ist. Radarwellen werden durch ein gasdichtes Trennelement in den Meßbereich eingekoppelt.

Bei handelsüblichen Meßgeräten erfolgt die galvanische Trennung in einem Eingangsmodul. Es werden sämtliche nach außen bestehenden elektrischen Verbindungen, d.h. üblicherweise mindestens zwei Versorgungsleitungen, mindestens eine Meßsignalleitung und eine Leitung über die Information über Sendezeitpunkte von Mikrowellenpulsen beim Pulsradar bzw. über einen Periodenbeginn beim FMCW-Radar übertragen werden, galvanisch getrennt.

Zur galvanischen Trennung der Versorgungsleitungen werden z.B. Gleichstrom-Gleichstrom-Wandler und zur galvanischen Trennung von Meßsignalleitungen z.B. Optokoppler eingesetzt.

Aufgrund der Anzahl der Leitungen und deren Beschaffenheit sind nicht nur mehrere sondern auch relativ teure Bauteile zur galvanischen Trennung erforderlich.

Es ist eine Aufgabe der Erfindung, ein mit Mikrowellen arbeitendes Füllstandsmeßgerät anzugeben, bei dem eine galvanische Trennung mittels einer sehr geringen Anzahl von kostengünstigen Bauteilen erfolgt.

Hierzu besteht die Erfindung in einem mit Mikrowellen arbeitenden Füllstandsmeßgerät, welches umfaßt:
- einen Generator zur Erzeugung von Mikrowellen,
- mindestens eine Antenne zum Senden und Empfangen von Mikrowellen,
- eine Mikrowellenleitung,
   - - die vom Generator zur Antenne führt und
   - - die eine Signalleitung und mindestens eine Schirmleitung aufweist,
- einen in die Signalleitung eingefügten ersten Kondensator zur galvanische Trennung der Signalleitung,
- einen in jede Schirmleitung eingefügten zweiten Kondensator zur galvanische Trennung der jeweiligen Schirmleitung, und
- eine Empfangs- und Auswerteeinheit, die aus den empfangenen Mikrowellen einen Füllstand bestimmt und die ein Ausgangssignal erzeugt, das dem Füllstand entspricht.

Gemäß einer ersten Ausgestaltung ist die Mikrowellenleitung eine auf einer ersten Seite einer Platine angeordnete Koplanar Leitung ist, bei der zu jeder Seite der Signalleitung je eine Schirmleitung angeordnet ist, und der erste und die zweiten Kondensatoren sind auf der ersten Seite der Platine angeordnete Bauteile.

Gemäß einer zweiten Ausgestaltung ist die Mikrowellenleitung eine auf einer Platine angeordnete Mikrostreifenleitung, bei der auf einer ersten Seite der Platine eine Signalleitung und ein erster Kondensator angeordnet sind und bei der auf einer zweiten der ersten Seite gegenüberliegenden Seite der Platine mindestens eine Schirmleitung und mindestens ein zweiter Kondensator angeordnet ist.

Gemäß einer dritten Ausgestaltung ist die Mikrowellenleitung eine auf einer Platine angeordnete Koplanar-Leitung, bei der zu jeder Seite der Signalleitung je eine Schirmleitung angeordnet ist, die einen ersten mit dem Generator verbundenen Abschnitt aufweist, in dem die Signalleitung und die Schirmleitungen auf einer ersten Seite der Platine angeordnet sind, und die einen zweiten mit der Antenne verbundenen Abschnitt aufweist, in dem die Signalleitung und die Schirmleitungen auf einer zweiten der ersten Seite gegenüberliegenden Seite der Platine angeordnet sind, wobei der erste und der zweite Abschnitt der Mikrowellenleitung überlappen, wobei der erste Kondensator durch überlappende Bereiche der Signalleitungen des ersten und des zweiten Abschnitts und einen dazwischen befindlichen Bereich der Platine gebildet ist und wobei die zweiten Kondensatoren durch überlappende Bereiche der Schirmleitungen des ersten und des zweiten Abschnitts und dazwischen befindliche Bereiche der Platine gebildet sind.

Gemäß einer vierten Ausgestaltung weist die Mikrowellenleitung einen ersten Abschnitt auf, in dem die Mikrowellenleitung eine auf einer Platine angeordnete Koplanar-Leitung ist, bei der auf einer ersten Seite der Platine eine Signalleitung und zu jeder Seite der Signalleitung je eine Schirmleitung angeordnet ist, und sie weist einen einen zweiten Abschnitt auf, in dem die Mikrowellenleitung eine Mikrostreifenleitung ist, die eine auf der ersten Seite der Platine verlaufende Signalleitung und mindestens eine auf einer zweiten der ersten Seite gegenüberliegenden Seite der Platine angeordnete Schirmleitung aufweist, wobei der erste und der zweite Abschnitt der Mikrowellenleitung überlappen, wobei der erste Kondensator auf der ersten Seite der Platine angeordnet ist, wobei die zweiten Kondensatoren durch überlappende Bereiche der Schirmleitungen des ersten und des zweiten Abschnitts und dazwischen befindliche Bereiche der Platine gebildet sind, und wobei entweder der erste Abschnitt mit der Antenne und der zweite Abschnitt mit dem Generator oder umgekehrt der zweite Abschnitt mit der Antenne und der erste Abschnitt mit dem Generator verbunden ist.

Gemäß einer fünften Ausgestaltung ist die Mikrowellenleitung eine Koaxialleitung,die einen mit dem Generator verbundenen ersten Abschnitt und einen mit der Antenne verbundenen zweiten Abschnitt aufweist. Zwischen dem ersten und dem zweiten Abschnitt ist eine Platte aus einem Isolator angeordnet, der erste Kondensator weist zwei jeweils in der Mitte der Platte einander gegenüberliegend angeordnete Elektroden auf, von denen eine generator-zugewandte Elektrode mit der Signalleitung des ersten Abschnitts und eine antennen-zugewandte Elektrode mit der Signalleitung des zweiten Abschnitts der Mikrowellenleitung verbunden ist, und der zweite Kondensator weist zwei jeweils auf einem äußeren Rand der Platte einander gegenüberliegend angeordnete Ringelektroden auf, von denen eine generator-zugewandte Ringelektrode mit der Schirmleitung des ersten Abschnitts und eine antennen-zugewandte Ringelektrode mit der Schirmleitung des zweiten Abschnitts der Mikrowellenleitung verbunden ist.

Gemäß einer Weiterbildung der fünften Ausgestaltung ist ein zwischen der Schirmleitung und der Signalleitung des zweiten Abschnitts der Mikrowellenleitung bestehender Hohlraum mit einem Isolator, insb. mit Glas, ausgefüllt.

Ein Vorteil der Erfindung besteht darin, daß die galvanische Trennung hochfrequenz-seitig, also zwischen dem Generator und der Antenne erfolgt. An diesem Ort ist nur eine einzige Leitung, nämlich die Mikrowellenleitung, galvanisch zu trennen. Hierdurch ist der Einsatz von im Vergleich zu Gleichstrom-Gleichstromwandlern oder Optokopplern kostengünstigen Kondensatoren möglich.

Ein weiterer Vorteil besteht darin, daß vorhandene Füllstandsmeßgeräte, die bisher nicht in explosionsgelährdeten Bereichen eingesetzt werden konnten, mit einer galvanischen Trennung nachgerüstet werden können.

Die Erfindung und weitere Vorteile werden nun anhand der Figuren der Zeichnung, in denen fünf Ausführungsbeispiele dargestellt sind, näher erläutert; gleiche Elemente sind in den Figuren mit gleichen Bezugszeichen versehen.
- Fig. 1: zeigt schematisch ein mit Mikrowellen arbeitendendes Füllstandsmeßgerät;
- Fig. 2: zeigt ein Ausführungsbeispiel der in Fig. 1 dargestellten Mikrowellenleitung, bei dem die Mikrowellenleitung eine auf einer Platine angeordnete Koplanar-Leitung ist, die mittels auf der Platine angeordneter Kondensatoren galvanisch getrennt ist;
- Fig. 3: zeigt ein Ausführungsbeispiel der in Fig. 1 dargestellten Mikrowellenleitung bei dem die Mikrowellenleitung eine auf einer Platine angeordnete Mikrostreifenleitung ist, die mittels auf der Platine angeordneter Kondensatoren galvanisch getrennt ist;
- Fig. 4: zeigt ein weiteres Ausführungsbeispiel der in Fig. 1 dargestellten Mikrowellenleitung, bei der ein erster Abschnitt der Mikrowellenleitung eine auf einer ersten Seite der Platine angeordnete Koplanar-Leitung ist und bei der ein zweiter Abschnitt eine auf einer zweiten Seite der Platine angeordnete Koplanar-Leitung ist;
- Fig. 5: zeigt einen Schnitt durch die Mikrowellenleitung von Fig. 3;
- Fig. 6: zeigt ein weiteres Ausführungsbeispiel der in Fig. 1 dargestellten Mikrowellenleitung bei dem ein erster Abschnitt der Mikrowellenleitung eine auf einer Platine angeordnete Koplanar-Leitung und ein zweiter Abschnitt eine auf derselben Platine angeordnete Mikrostreifenleitung ist; und
- Fig. 7: zeigt ein Ausführungsbeispiel der in Fig. 1 dargestellten Mikrowellenleitung bei dem die Mikrowellenleitung eine Koaxialleitung ist, in die ein Kondensator eingefügt ist.

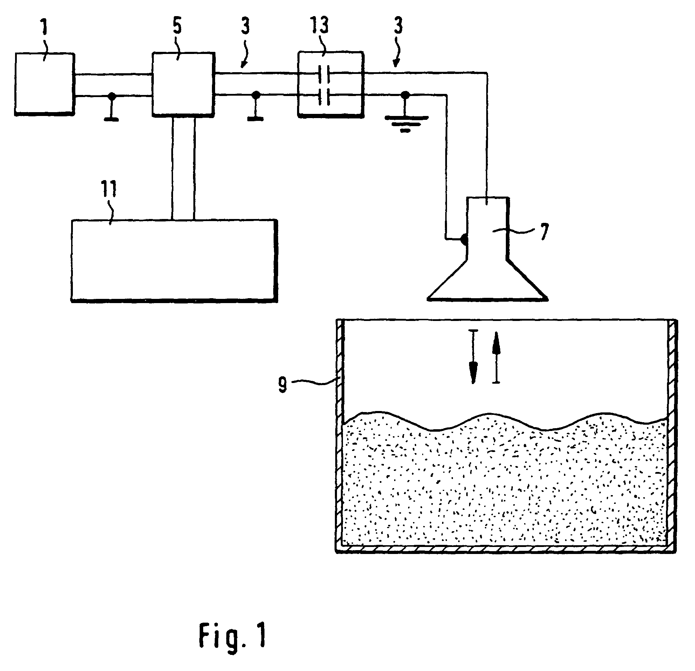

In Fig. 1 ist ein mit Mikrowellen arbeitendes Füllstandsmeßgerät schematisch dargestellt. Die Mikrowellen werden von einem Generator 1 erzeugt. Dies ist beispielsweise ein Pulsradar-Gerät, ein FMCW-Gerät oder ein kontinuierlich schwingender Mikrowellen-Oszillator, der ein Sendesignal erzeugt.

Das Sendesignal wird über eine Sende-Empfangsweiche 5, z.B. einen Richtkoppler, zu einer oberhalb eines Behälters 9 angeordneten Antenne 7 übertragen. Von der Sende-Empfangsweiche 5 führt eine Mikrowellenleitung 3 zur Antenne 7. Dies ist beispielsweise eine auf einer Platine angeordnete Mikrostreifenleitung, eine Koplanar-Leitung, eine Kombination aus Mikrostreifen- und Koplanar-Leitung oder eine Koaxialleitung.

Eine Koplanar-Leitung weist drei parallel zueinander auf einer Platine aufgebrachte planare Leitungsstrukturen auf, von denen eine mittlere eine Signalleitung ist und zwei äußere jeweils Schirmleitungen sind.

Eine Mikrostreifenleitung weist eine auf einer ersten Seite einer Platine angeordnete planare Leitungsstruktur auf, die als Signalleitung dient. Auf einer der ersten Seite gegenüberliegenden Seite der Platine ist eine weitere, planare Leitungsstruktur aufgebracht, die üblicherweise deutlich breiter als die Signalleitung ist und als Schirmleitung dient.

Der Behälter 9 enthält ein Füllgut, dessen Füllstand zu bestimmen ist. Von der Antenne 7 ausgesendete Mikrowellen werden an der Oberfläche des Füllguts reflektiert und die Echowellen werden von der Antenne 7 aufgenommen. Ein entsprechendes Empfangssignal ist über die Sende-Empfangsweiche 5 einer Empfangs- und Auswerteschaltung 11 zugeführt. Über dieselbe Sende-Empfangsweiche 5 ist das vom Generator 1 erzeugte Sendesignal der Empfangs- und Auswerteschaltung 11 zugeführt. Aus den beiden Signalen wird der Abstand zwischen Antenne 7 und Füllgutoberfläche bestimmt. Da der Abstand zwischen der Antenne 7 und dem Behälterboden bekannt ist, ergibt sich hieraus direkt der zu messende Füllstand.

Die Antenne 7 ist z.B. ein aus einem elektrisch leitenden Material, z.B. aus Aluminium oder einem Edelstahl, bestehender Hornstrahler oder eine stabförmige Antenne aus einem Dielektrikum, z.B. aus Polytetrafluorethylen (PTFE).

Die letztgenannte Antennenform wird häufig auch als dielektrischer Stielstrahler bezeichnet.

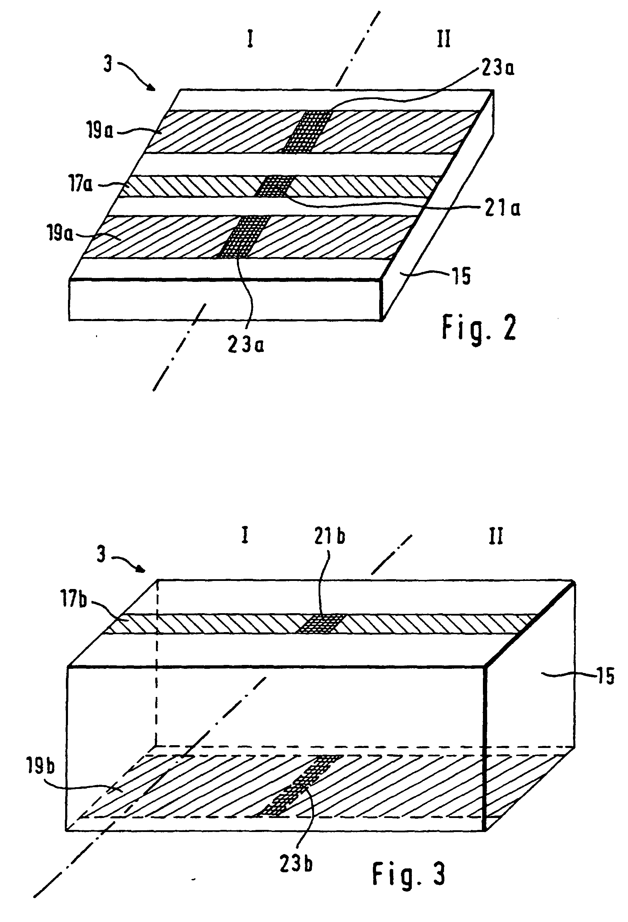

Erfindungsgemäß weist die Mikrowellenleitung 3 eine galvanische Trennung 13 auf. In den Figuren 2 bis 7 sind fünf Ausführungsbeispiele dargestellt. Bei allen Ausführungsbeispielen weist die Mikrowellenleitung 3 jeweils eine Signalleitung und mindestens eine Schirmleitung auf. In die Signalleitung ist jeweils ein erster Kondensator zur galvanische Trennung der Signalleitung eingefügt und in jede Schirmleitung ist jeweils ein zweiter Kondensator zur galvanische Trennung der jeweiligen Schirmleitung eingefügt.

Die Kondensatoren haben eine mechanisch feste Isolation, sie werden im Fehlerfall, z.B. bei hoher Überlast, hochohmig und weisen eine hohe Spannungsfestigkeit, z.B. von 500 V, auf.

In dem in Fig. 2 dargestellten Ausführungsbeispiel ist die Mikrowellenleitung 3 eine auf einer ersten Seite einer Platine 15 angeordnete Koplanar-Leitung. Eine der ersten Seite gegenüberliegende zweite Seite der Platine 15 ist entweder frei oder mit einer metallischen Beschichtung versehen und mit einem Bezugspotential, z.B. Masse, verbunden. Die Koplanar-Leitung besteht aus drei parallel zueinander verlaufenden auf die Platine 15 aufgebrachten planaren Leitungsstrukturen. Die mittlere Leitung dient als Signalleitung 17a und zu beiden Seiten der Signalleitung 17a verläuft jeweils eine Schirmleitung 19a.

In die Signalleitung 17a ist auf der ersten Seite der Platine 15 ein erster Kondensator 21a eingefügt, durch den eine galvanische Trennung der Signalleitung 17a erfolgt. In die Schirmleitungen 19a sind auf der ersten Seite der Platine 15 zweite Kondensatoren 23a eingefügt, durch die eine galvanische Trennung der Schirmleitungen 19a erfolgt. Die Kondensatoren 21a, 23a sind z.B. handelsübliche für Mikrowellen geeignete auf einer Platine anbringbare auch als Surface-Mounted-Device bezeichnete Bauteile.

Durch die ersten und zweiten Kondensatoren 21a, 23a ist die Mikrowellenleitung 3 in einen generator-zugewandten Abschnitt I und einen antennen-zugewandten Abschnitt II unterteilt. Auf der generator-zugewandten Seite sind die Signalleitung 17a und Schirmleitungen 19a erdfrei mit dem Generator 1 verbunden. Durch die Erdfreiheit sind Potentialausgleichsleitungen, z.B. von einer Versorgung zum Meßgerät, weitgehend überflüssig. Auf der antennen-zugewandten Seite ist die Signalleitung 17a mit einem in der Antenne 7 angeordneten in der Figur nicht dargestellten Erregerelement verbunden. Das Erregerelement dient dazu Mikrowellen von der Mikrowellenleitung 3 in die Antenne 7 einzukoppeln und umgekehrt von der Antenne 7 aufgenommene Mikrowellen in die Mikrowellenleitung 3 einzukoppeln. Die Schirmleitungen 19a des antennen-zugewandten Abschnitts II sind mit Erdpotential verbunden. Ist die Antenne 7 ein dielektrischer Stielstrahler, so ist dessen metallische Befestigung mit dem Erdpotential verbunden. Ist die Antenne 7 ein Hornstrahler, so ist das metallische Horn mit dem Erdpotential verbunden.

Fig. 3 zeigt ein weiteres Ausführungsbeispiel der in Fig. 1 dargestellten Mikrowellenleitung 3. Als Mikrowellenleitung 3 dient hier eine auf der Platine 15 angeordnete Mikrostreifenleitung. Eine Signalleitung 17b ist auf einer ersten Seite der Platine 15 angeordnet. Auf der der ersten Seite gegenüberliegenden zweiten Seite der Platine 15 ist eine Schirmleitung 19b angeordnet. Die Mikrowellenleitung 3 ist auch hier durch erste und zweite Kondensatoren 21b, 23b in zwei Abschnitte I, II unterteilt, nämlich einen ersten mit dem Generator 1 verbundenen Abschnitt I und einen zweiten mit der Antenne 7 verbundenen Abschnitt II. Wie bei dem Ausführungsbeispiel von Fig. 2 sind die Kondensatoren 21b, 23b auf der Platine 15 angebracht und bewirken eine galvanische Trennung der Signälleitung 17b und der Schirmleitung 19b.

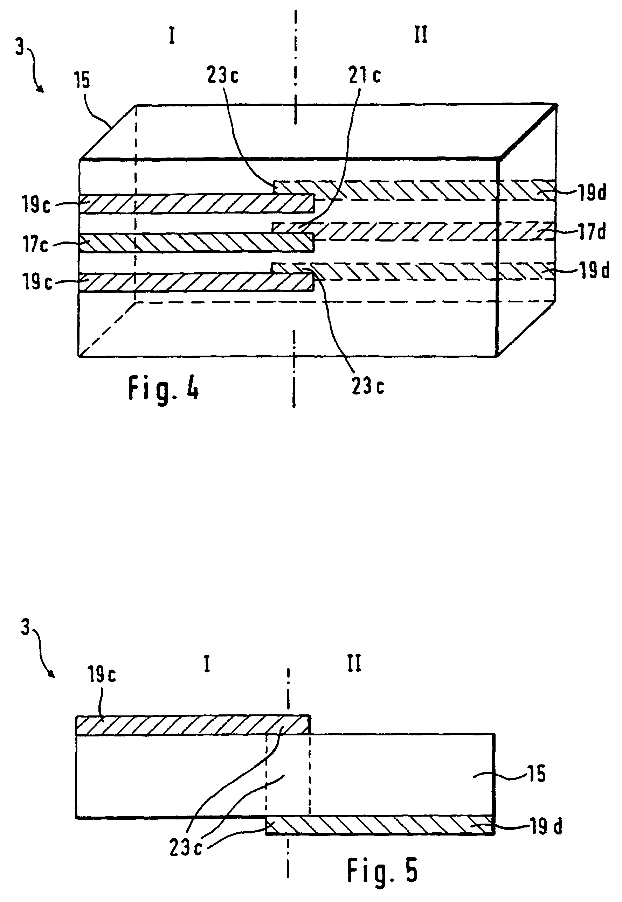

Fig. 4 zeigt ein weiteres Ausführungsbeispiel bei dem die Mikrowellenleitung 3 eine auf einer Platine 15 angeordnete Koplanar-Leitung ist. Die Mikrowellenleitung 3 ist auch hier durch erste und zweite Kondensatoren 21c, 23c in zwei Abschnitte I, II unterteilt, nämlich einen ersten mit dem Generator 1 verbundenen Abschnitt I und einen zweiten mit der Antenne 7 verbundenen Abschnitt II.

In dem ersten Abschnitt I sind eine Signalleitung 17c und zwei Schirmleitungen 19c auf der ersten Seite der Platine 15 angeordnet. In dem zweiten Abschnitt II sind eine Signalleitung 17d und zwei Schirmleitungen 19d auf der zweiten der ersten Seite gegenüberliegenden Seite der Platine 15 angeordnet. Die beiden Abschnitte I und II überlappen. Die antennen-zugewandten Enden der Signalleitung 17c und der Schirmleitungen 19c des ersten Abschnitts I sind jeweils über den generator-zugewandten Enden der entsprechenden Signalleitung 17d bzw. Schirmleitung 19d des zweiten Abschnitts II angeordnet. Die überlappenden Bereiche schließen jeweils einen dazwischen befindlichen Bereich der Platine 15 ein.

Der erste Kondensator 21c, durch den die Signalleitungen 17c, 17d miteinander galvanisch getrennt verbunden sind ist durch die überlappenden Bereiche der Signalleitungen 17c, 17d des ersten und des zweiten Abschnitts I, II und einen dazwischen befindlichen Bereich der Platine 15 gebildet.

Die zweiten Kondensatoren 23c, durch die die Schirmleitungen 19c, 19d miteinander galvanisch getrennt verbunden sind, sind durch die überlappenden Bereiche der jeweiligen Schirmleitungen 19c, 19d des ersten und des zweiten Abschnitts I, II und die dazwischen befindlichen Bereiche der Platine 15 gebildet.

Fig. 5 zeigt einen Schnitt durch die Mikrowellenleitung 3 von Fig. 4, aus dem die Überlappung der Abschnitte I und II und die dadurch gebildeten Kondensatoren, am Beispiel der Schirmleitungen 19c, 19d und des zweiten Kondesators 23c, gezeigt sind.

In Abhängigkeit von den Eigenschaften, insb. der Frequenz bzw. des Frequenzspektrums, der zu übertragenden Mikrowellen kann die Geometrie der Enden der Signalleitungen und der Schirmleitungen besonders angepaßt sein. So lassen sich z.B. breitbandige Übertragungseigenschaften erzielen, indem die Enden vorzugsweise deutlich breiter als die eigentlichen Leitungen ausgebildet sind und die Form von Viertelkreises aufweisen. Auch ist durch diese Geometrie der Impedanzsprung an dem Übergang weniger groß und es wird somit weniger Mikrowellenstrahlung reflektiert.

Ein Vorteil der letztbeschriebenen Mikrowellenleitung 3 ist, daß keine zusätzlichen Kondensatoren erforderlich sind, sondern stattdessen die ohnehin vorhandene Platine 15 genutzt wird.

Auf der generator-zugewandten Seite sind die Signalleitung 17c und Schirmleitungen 19c erdfrei mit dem Generator 1 verbunden. Auf der antennen-zugewandten Seite ist die Signalleitung 17d mit einem in der Antenne 7 angeordneten in der Figur nicht dargestellten Erregerelement verbunden. Auch hier dient das Erregerelement dazu Mikrowellen von der Mikrowellenleitung 3 in die Antenne 7 einzukoppeln und umgekehrt von der Antenne 7 aufgenommene Mikrowellen in die Mikrowellenleitung 3 einzukoppeln. Die Schirmleitungen 19d des antennen-zugewandten Abschnitts II sind mit Erdpotential verbunden. Ist die Antenne 7 ein dielektrischer Stielstrahler, so ist dessen metallische Befestigung mit dem Erdpotential verbunden. Ist die Antenne 7 ein Hornstrahler, so ist das metallische Horn mit dem Erdpotential verbunden.

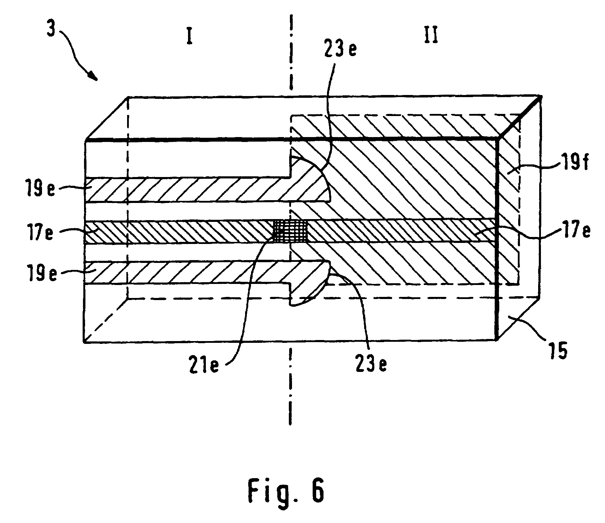

Bei dem in Fig. 6 dargestellten Ausführungsbeispiel weist die Mikrowellenleitung 3 einen ersten mit dem Generator 1 verbundenen Abschnitt I auf, der als Koplanar-Leitung ausgebildet ist. Ein zweiter mit der Antenne 7 verbundener Abschnitt II der Mikrowellenleitung 3 ist als Mikrostreifenleitung ausgebildet. Beide Abschnitte I, II sind auf derselben Platine 15 angeordnet.

Eine Signalleitung 17e ist sowohl im ersten als auch im zweiten Abschnitt I, II auf der ersten Seite der Platine 15 angeordnet. Im ersten Abschnitt I ist zu jeder Seite der Signalleitung 17e je eine Schirmleitung 19e angeordnet.

Auf der zweiten Seite der Platine 15 ist in dem zweiten Abschnitt II eine Schirmleitung 19f angeordnet. Diese besteht aus einem metallisch beschichteten Bereich der zweiten Seite der Platine 15. Der erste und der zweite Abschnitt I und II überlappen. Ein antennen-zugewandtes Ende jeder der auf der ersten Seite der Platine 15 angeordneten Schirmleitungen 19e überdeckt somit den metallisch beschichteten Bereich, der die Schirmleitung 19f des zweiten Abschnitts II bildet.

Anstelle einer einzigen großflächigen Schirmleitung 19f können selbstverständlich auch zwei oder mehr einzelne z.B. streifenförmige Schirmleitungen auf der zweiten Seite der Platine 15 aufgebracht sein. Es muß lediglich gewährleistet sein, daß ein ausreichender Überlapp zwischen den Schirmleitungen 19e des ersten Abschnitts I und der bzw. den Schirmleitungen des zweiten Abschnitts II besteht.

Der erste Kondensator 21e ist auf der ersten Seite der Platine 15 in die Signalleitung 17e eingefügt. Die zweiten kondensatoren 23e sind durch die überlappenden Bereiche der Schirmleitungen 19e des ersten und 19f des zweiten Abschnitts II und dazwischen befindliche Bereiche der Platine 15 gebildet.

Die antennen-zugewandten Enden der Schirmleitungen 19e sind gegenüber den eigentlichen Schirmleitungen 19e verbreitert und weisen die Form eines Viertelkreises auf. Hierdurch wird erreicht, daß der Impedanzsprung für Mikrowellenstrahlung an dem Übergang vom ersten zum zweiten Abschnitt weniger groß ist und somit weniger Mikrowellenstrahlung reflektiert wird. Auch wird der Frequenzbereich, indem günstige Übertragungseigenschaften vorliegen durch diese Geometrie verbreitert. Andere Geometrien der Enden, z.B. solche, die an eine spezielle zu verwendende Mikrowellenstrahlung angepaßt sind, sind ebenfalls einsetzbar.

Durch die ersten und zweiten Kondensatoren 21e, 23e ist die Mikrowellenleitung 3 in einen generator-zugewandten Abschnitt I und einen antennen-zugewandten Abschnitt II unterteilt. Auf der generator-zugewandten Seite sind die Signalleitung 17e und Schirmleitungen 19e erdfrei mit dem Generator 1 verbunden. Auf der antennen-zugewandten Seite ist die Signalleitung 17e genau wie bei den vorgenannten Ausführungsbeispielen mit einem in der Antenne 7 angeordneten in der Figur nicht dargestellten Erregerelement verbunden.

Selbstverständlich kann die beschriebene Mikrowellenleitung 3 von Fig. 6 auch in umgekehrter Orientierung verwendet werden. Entsprechend wäre dann der als Koplanar-Leitung ausgebildete erste Abschnitt I mit der Antenne 7 und der als Mikrostreifenleitung ausgebildete zweite Abschnitt II erdfrei mit dem Generator 1 zu verbinden.

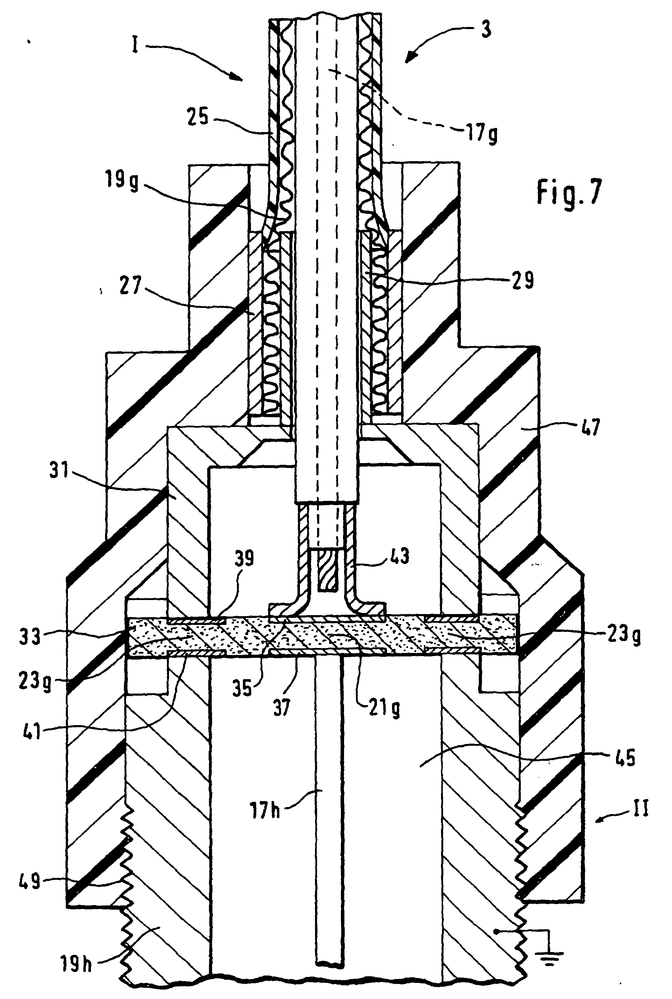

Bei dem in Fig. 7 dargestellten Ausführungsbeispiel ist die Mikrowellenleitung 3 eine Koaxialleitung. Sie weist einen mit dem Generator 1 verbundenen ersten Abschnitt I und einen mit der Antenne 7 verbundenen zweiten Abschnitt II auf. In beiden Abschnitten weist die Koaxialleitung eine Signalleitung 17g, 17h und eine diese koaxial umgebende Schirmleitung 19g, 19h auf.

Zwischen dem ersten und dem zweiten Abschnitt I, II ist eine Platte 33 aus einem Isolator, z.B. aus Aluminiumoxid, angeordnet. Die Platte 33 weist zwei in deren Mitte einander gegenüberliegend angeordnete Elektroden 35, 37 auf, die einen ersten Kondensator 21g bilden, durch den die Signalleitungen 17g, 17h galvanisch getrennt sind. Ein zweiter Kondensator 23g ist durch zwei jeweils auf einem äußeren Rand der isolierenden Platte 33 einander gegenüberliegend angordnete Ringelektroden 39, 41 gebildet. Durch diesen sind die Schirmleitungen 19g, 19h galvanisch getrennt.

Die generator-zugewandte in der Mitte der Platte 33 angeordnete Elektrode 35 ist mit der Signalleitung 17g des ersten Abschnitts I und die antennen-zugewandte Elektrode 37 ist mit der Signalleitung 17h des zweiten Abschnitts II der Mikrowellenleitung 3 verbunden. Analog ist die generator-zugewandte Ringelektrode 39 mit der Schirmleitung 17g des ersten Abschnitts I und eine antennen-zugewandte Ringelektrode 41 ist mit der Schirmleitung 17h des zweiten Abschnitts II der Mikrowellenleitung 3 verbunden.

Der erste Abschnitt I ist beispielsweise eine im Handel erhältliche Koaxialleitung, die außen von einer Isolation 25 umgeben ist.

Innenleiter von handelsüblichen Koaxialleitungen weisen einen geringen Durchmesser auf. Aus diesem Grund ist die Signalleitung 17g des ersten Abschnitts I endseitig z.B. mit einem Hohlniet 43 versehen. Dieser weist einen rohrfömigen Bereich auf, der das freie Ende der Signalleitung 17g eng umschließt und mit dieser z.B. über eine Lötung elektrisch leitend verbunden ist. Eine sich radial nach außen erstreckende Schulter des Hohlniet 43 ist elektrisch leitend, z.B. ebenfalls über eine Lötverbindung, mit der generator-zugewandten Elektrode 35 des ersten Kondensators 21g verbunden.

An dem antennen-zugewandten Ende des ersten Abschnitts I weist die Mikrowellenleitung 3 einen Abschnitt ohne Isolation auf. In diesen Abschnitt ist in die Schirmleitung 19g ein Stützrohr 29 eingesteckt. Dadurch bedingt ist der Durchmesser des antennen-zugewandten Endes der Schirmleitung 19g geringfügig aufgeweitet. Der abisolierte Abschnitt der Mikrowellenleitung ist in einem Metallrohr 27 angeordnet. Dieses ist über das Leitungsende gestülpt und anschießend verpreßt, so daß das Ende der Schirmleitung 19g zwischen dem Metallrohr 27 und dem Stützrohr 29 eingespannt ist. Es besteht eine elektrisch leitende Verbindung zwischen dem Stützrohr 29 und der Schirmleitung 19g.

An das Stützrohr 29 ist in antennen-zugewandter Richtung eine Metallhülse 31 mit geringfügig größerem Durchmesser angeformt. Eine ringscheibenförmige Stirnfläche der Metallhülse 31 liegt auf der generator-zugewandten Ringelektrode 39 des zweiten Kondensators 23g auf. Es besteht somit über das Stützrohr 29 und die Metallhülse 31 eine elektrisch leitende Verbindung zwischen der Schirmleitung 19g und der generator-zugewandten Ringelektrode 39.

Die auf der antennen-zugewandten Seite der Platte 33 angeordnete Mikrowellenleitung 3 kann genau wie die Mikrowellenleitung 3 des ersten Abschnitts I eine handelsübliche Koaxialleitung sein. In diesem Fall kann deren elektrischer Anschluß an die Elektrode 37 und die Ringelektrode 41 ebenfalls auf die oben beschriebene Weise erfolgen. Die Anordnung wäre dann symmetrisch zu der Platte 33.

Bei dem in Fig. 7 gezeigten Ausführungsbeispiel weist der Abschnitt II der Mikrowellenleitung 3 einen Metallstift als Signalleitung 17h auf. Diese liegt mit einer kreisförmigen Stirnfläche auf der in der Mitte der Platte 33 angeordneten antennen-zugewandten Elektrode 37 auf. Als Schirmleitung 19h ist eine Metallhülse, z.B. aus einem Edelstahl, vorgesehen, die mit einer ringscheiben-förmigen Stirnfläche auf der antennen-zugewandten Ringelektrode 41 aufliegt. Zwischen der Elektrode 37 und der Signalleitung 17h, sowie zwischen der Ringelektrode 41 und der Schirmleitung 19h besteht eine elektrisch leitende Verbindung, z.B. eine Lötverbindung.

Vorzugsweise ist ein zwischen der Schirmleitung 19h und der Signalleitung 17h auf der antennen-zugewandten Seite der Platte 33 bestehender Hohlaum 45 mit einem Isolator, z.B. mit Glas, ausgefüllt. Hierdurch ist eine druckfeste Durchführung gegeben.

Die Signalleitung 17h ist z.B. elektrisch leitend mit einem in der Antenne 7 angeordneten Erregerstift verbunden.

Die Platte 33 mit dem ersten und dem zweiten Kondensator 21g, 23g als auch die daran angrenzenden Bereiche, in denen der Anschluß der beiden Abschnitte I, II der Mikrowellenleitung 3 an den ersten und den zweiten Kondensator 21g, 23g erfolgt, ist von einer Isolation 47, z.B. aus Kunststoff, umgeben. In dem Ausführungsbeispiel von Fig. 7 weist die Isolation 47 in einem antennen-zugewandten Abschnitt ein Innengewinde 49 auf, mittels dessen sie auf ein auf der Schirmleitung 19h angeordnetes Außengewinde geschraubt ist. Andere Arten der Befestigung, z.B. mittels Schnapp- oder Bajonettverschlüssen sind ebenfalls möglich.

Die Schirmleitung 19h des zweiten Abschnitts II ist mit dem Erdpotential verbunden. Der generator-zugewandte Abschnitt I der Mikrowellenleitung 3 ist dagegen erdfrei mit dem Mikrowellengenerator 1 verbunden.

Die beschriebenen Mikrowellenleitungen 3 mit galvanischer Trennung können jeweils auch nachträglich in ein bestehendes mit Mikrowellen arbeitendes Füllstandsmeßgerät eingebracht werden.

Die Erfindung ist auch bei solchen mit Mikrowellen arbeitenden Füllstandsmeßgeräten einsetzbar, die nicht nur eine einzige als Sender und als Empfänger dienende Antenne, sondern zwei oder mehr Antennen aufweisen. Jede zu einer der Antennen führende Mikrowellenleitung wäre dann mit einer der vorgehend beschriebenene galvanischen Trennungen auszustatten.

## Patentansprüche

1. Mit Mikrowellen arbeitendes Füllstandsmeßgerät, welches umfaßt:
- einen Generator (1) zur Erzeugung von Mikrowellen,
- mindestens eine Antenne (7) zum Senden und Empfangen von Mikrowellen,
- eine Empfangs- und Auswerteeinheit (11), die aus den empfangenen Mikrowellen einen Füllstand bestimmt und die ein Ausgangssignal erzeugt, das dem Füllstand entspricht,
- eine Mikrowellenleitung (3),
- - die vom Generator (1) zur Antenne (7) führt und
- - die eine Signalleitung (17a, 17b, 17c, 17d, 17e, 17g, 17h) und mindestens eine Schirmleitung (19a, 19b, 19c, 19d, 19e, 19f, 19g, 19h) aufweist,
**gekennzeichnet durch**
- einen in die Signalleitung (17a, 17b, 17c, 17d, 17e, 17g, 17h) eingefügten ersten Kondensator (21a, 21b, 21c, 21e, 21g) zur galvanischen Trennung der Signalleitung (17a, 17b, 17c, 17d, 17e, 17g, 17h),
- und **durch** einen in jede der mindestens einen Schirmleitung (19a, 19b, 19c, 19d, 19e, 19f, 19g, 19h) eingefügten zweiten Kondensator (23a, 23b, 23c, 23e, 23g) zur galvanischen Trennung der jeweiligen Schirmleitung (19a, 19b, 19c, 19d, 19e, 19f, 19g, 19h).

2. Mit Mikrowellen arbeitendes Füllstandsmeßgerät, nach Anspruch 1, bei dem
- die Mikrowellenleitung (3) eine auf einer ersten Seite einer Platine (15) angeordnete Koplanar-Leitung ist,
-- bei der zu jeder Seite der Signalleitung (17a) je eine Schirmleitung (19a) angeordnet ist, und
- der erste und die zweiten Kondensatoren (21a, 23a) auf der ersten Seite der Platine (15) angeordnete Bauteile sind.

3. Mit Mikrowellen arbeitendes Füllstandsmeßgerät, nach Anspruch 1, bei dem
- die Mikrowellenleitung (3) eine auf einer Platine (15) angeordnete Mikrostreifenleitung ist,
- - bei der auf einer ersten Seite der Platine (15) eine Signalleitung (17b) und ein erster Kondensator (21b) angeordnet sind und
- - bei der auf einer zweiten der ersten Seite gegenüberliegenden Seite der Platine (15) mindestens eine Schirmleitung (19b) und mindestens ein zweiter Kondensator (23b) angeordnet ist.

4. Mit Mikrowellen arbeitendes Füllstandsmeßgerät, nach Anspruch 1, bei dem
- die Mikrowellenleitung (3) eine auf einer Platine (15) angeordnete Koplanar-Leitung ist,
- - bei der zu jeder Seite der Signalleitung (17c, 17d) je eine Schirmleitung (19c, 19d) angeordnet ist,
- - die einen ersten mit dem Generator (1) verbundenen Abschnitt (I) aufweist,
- - - in dem die Signalleitung (17c) und die Schirmleitungen (19c) auf einer ersten Seite der Platine (15) angeordnet sind, und
- - die einen zweiten mit der Antenne (7) verbundenen Abschnitt (II) aufweist,
- - - in dem die Signalleitung (17d) und die Schirmleitungen (19d) auf einer zweiten der ersten Seite gegenüberliegenden Seite der Platine (15) angeordnet sind,
- wobei der erste und der zweite Abschnitt (I, II) der Mikrowellenleitung (3) überlappen,
- wobei der erste Kondensator (21c) durch überlappende Bereiche der Signalleitungen (17c, 17d) des ersten und des zweiten Abschnitts (I, II) und einen dazwischen befindlichen Bereich der Platine (15) gebildet ist und
- wobei die zweiten Kondensatoren (23c) durch überlappende Bereiche der Schirmleitungen (19c, 19d) des ersten und des zweiten Abschnitts (I, II) und dazwischen befindliche Bereiche der Platine (15) gebildet sind.

5. Mit Mikrowellen arbeitendes Füllstandsmeßgerät, nach Anspruch 1, bei dem
- die Mikrowellenleitung (3) einen ersten Abschnitt (I) aufweist,
- - in dem die Mikrowellenleitung (3) eine auf einer Platine (15) angeordnete Koplanar-Leitung ist,
- - bei der auf einer ersten Seite der Platine (15) eine Signalleitung (17e) und zu jeder Seite der Signalleitung (17e) je ein Schirmleitung (19e) angeordnet ist,
- die Mikrowellenleitung (3) einen zweiten Abschnitt (II) aufweist,
- - in dem die Mikrowellenleitung (3) eine Mikrostreifenleitung ist,
- - - die eine auf der ersten Seite der Platine (15) verlaufende Signalleitung (17e) und mindestens eine auf einer zweiten der ersten Seite gegenüberliegenden Seite der Platine (15) angeordnete Schirmleitung (19f) aufweist,
- wobei der erste und der zweite Abschnitt (I, II) der Mikrowellenleitung (3) überlappen,
- wobei der erste Kondensator (21e) auf der ersten Seite der Platine (15) angeordnet ist
- wobei die zweiten Kondensatoren (23e) durch überlappende Bereiche der Schirmleitungen (19e, 19f) des ersten und des zweiten Abschnitts (I, II) und dazwischen befindliche Bereiche der Platine (15) gebildet sind, und
- bei dem entweder der erste Abschnitt (I) mit der Antenne (7) und der zweite Abschnitt (II) mit dem Generator (1) oder umgekehrt der zweite Abschnitt (II) mit der Antenne (7) und der erste Abschnitt (I) mit dem Generator (1) verbunden ist.

6. Mit Mikrowellen arbeitendes Füllstandsmeßgerät, nach Anspruch 1, bei dem
- die Mikrowellenleitung (3) eine Koaxialleitung ist,
- die einen mit dem Generator (1) verbundenen ersten Abschnitt (I) und einen mit der Antenne (7) verbundenen zweiten Abschnitt (II) aufweist,
- zwischen dem ersten und dem zweiten Abschnitt (I, II) eine Platte (33) aus einem Isolator angeordnet ist,
- der erste Kondensator (21g) zwei jeweils in der Mitte der Platte (33) einander gegenüberliegend angeordnete Elektroden (35, 37) aufweist,
- - von denen eine generator-zugewandte Elektrode (35) mit der Signalleitung (17g) des ersten Abschnitts (I) und eine antennen-zugewandte Elektrode (37) mit der Signalleitung (17h) des zweiten Abschnitts (II) der Mikrowellenleitung (3) verbunden ist, und
- der zweite Kondensator (23g) zwei jeweils auf einem äußeren Rand der Platte (33) einander gegenüberliegend angeordnete Ringelektroden (39, 41) aufweist,
- - von denen eine generator-zugewandte Ringelektrode (39) mit der Schirmleitung (19g) des ersten Abschnitts (I) und eine antennen-zugewandte Ringelektrode (41) mit der Schirmleitung (19h) des zweiten Abschnitts (II) der Mikrowellenleitung (3) verbunden ist.

7. Mit Mikrowellen arbeitendes Füllstandsmeßgerät, nach Anspruch 6, bei dem ein zwischen der Schirmleitung (19g) und der Signalleitung (17g) des zweiten Abschnitts (II) der Mikrowellenleitung (3) bestehender Hohlraum (45) mit einem Isolator, insb. mit Glas, ausgefüllt ist.

## Claims

1. A level meter which operates using microwaves, comprising:
- a generator (1) for the generation of microwaves,
- at least one antenna (7) for the transmission and reception of microwaves,
- a receiving and evaluation unit (11) which determines a level on the basis of the microwaves received and generates an output signal which corresponds to the level, and
- a microwave line (3)
- - which leads from the generator (1) to the antenna (7) and
- - which has a signal line (17a, 17b, 17c, 17d, 17e, 17g, 17h) and at least one shield line (19a, 19b, 19c, 19d, 19e, 19f, 19g, 19h),
**characterised by**
- a first capacitor (21a, 21b, 21c, 21e, 21g) inserted into the signal line (17a, 17b, 17c, 17d, 17e, 17g, 17h) for the electrical division thereof,
- and by a second capacitor (23a, 23b, 23c, 23e, 23g) inserted into each of the at least one shield line (19a, 19b, 19c, 19d, 19e, 19f, 19g, 19h) for the electrical division of each respective shield line (19a, 19b, 19c, 19d, 19e, 19f, 19g, 19h).

2. A level meter, which operates using microwaves, according to claim 1, wherein
- the microwave line (3) is a coplanar line arranged on a first side of a board (15),
- - in which line (3) a shield line (19a) is arranged on either side of the signal line (17a), and
- the first and second capacitors (21a, 23a) are components arranged on the first side of the board (15).

3. A level meter, which operates using microwaves, according to claim 1, wherein
- the microwave line (3) is a microstrip line arranged on a board (15),
- - in which line (3) a signal line (17b) and a first capacitor (21b) are arranged on a first side of the board (15) and
- - in which line (3) at least one shield line (19b) and at least one second capacitor (23b) are arranged on a second side of the board (15) opposite the first side.

4. A level meter, which operates using microwaves, according to claim 1, wherein
- the microwave line (3) is a coplanar line arranged on a board (15),
- - in which line (3) a shield line (19c, 19d) is arranged on either side of each respective signal line (17c, 17d) and
- - which line (3) has a first portion (I) connected to the generator (1),
- - - in which portion (I) the signal line (17c) and the shield lines (19c) are arranged on a first side of the board (15), and
- - which line (3) has a second portion (II) connected to the antenna (7),
- - - in which portion (II) the signal line (17d) and the shield lines (19d) are arranged on a second side of the board (15) opposite the first side,
- wherein the first and second portions (I, II) of the microwave line (3) overlap,
- wherein the first capacitor (21c) is formed by overlapping regions of the signal lines (17c, 17d) of the first and the second portion (I, II) and a region of the board (15) located therebetween, and
- wherein the second capacitors (23c) are formed by overlapping regions of the shield lines (19c, 19d) of the first and the second portion (I, II) and regions of the board (15) located therebetween.

5. A level meter, which operates using microwaves, according to claim 1, wherein
- the microwave line (3) has a first portion (I)
- - in which the microwave line (3) is a coplanar line arranged on a board ( 15),
- - - in which line (3) a signal line (17e) is arranged on a first side of the board (15) and a shield line ( 19e) is arranged on either side of the signal line (17e),
- the microwave line (3) has a second portion (II)
- - in which the microwave line (3) is a microstrip line
- - - which has a signal line (17e) extending on the first side of the board (15) and at least one shield line (19f) arranged on a second side of the board (15) opposite the first side,
- wherein the first and second portions (I, II) of the microwave line (3) overlap,
- wherein the first capacitor (21e) is arranged on the first side of the board (15),
- wherein the second capacitors (23e) are formed by overlapping regions of the shield lines (19e, 19f) of the first and the second portion (I, II) and regions of the board (15) located therebetween, and
- wherein either the first portion (I) is connected to the antenna (7) and the second portion (II) is connected to the generator (1) or, conversely, the second portion (II) is connected to the antenna (7) and the first portion (I) is connected to the generator (1).

6. A level meter, which operates using microwaves, according to claim 1, wherein
- the microwave line (3) is a coaxial line
- - which has a first portion (I) connected to the generator (1) and a second portion (II) connected to the antenna (7),
- a plate (33) comprising an insulator is arranged between the first and the second portion (I, II),
- the first capacitor (21g) has two electrodes (35, 37) which are each arranged in the middle of the plate (33) so as to lie opposite one another,
- - of which a generator-facing electrode (35) is connected to the signal line (17g) of the first portion (I) and an antenna-facing electrode (37) is connected to the signal line (17h) of the second portion (II) of the microwave line (3), and
- the second capacitor (23g) has two ring electrodes (39, 41) which are each arranged on an outer edge of the plate (33) so as to lie opposite one another,
- - of which a generator-facing ring electrode (39) is connected to the shield line (19g) of the first portion (I) and an antenna-facing ring electrode (41) is connected to the shield line (19h) of the second portion (II) of the microwave line (3).

7. A level meter, which operates using microwaves, according to claim 6, wherein a cavity (45) existing between the shield line (19g) and the signal line (17g) of the second portion (II) of the microwave line (3) is filled with an insulator, especially glass.

## Revendications

1. Appareil de mesure du niveau de remplissage fonctionnant avec des micro-ondes, lequel comprend :
- un générateur (1) pour la production de micro-ondes,
- au moins une antenne (7) pour l'envoi et la réception de micro-ondes,
- une unité de réception et d'évaluation (11) qui détermine à partir des micro-ondes reçues, un niveau de remplissage et qui produit un signal de sortie correspondant au niveau de remplissage,
- une conduite de micro-ondes (3),
-- conduisant du générateur (1) vers l'antenne (7) et
-- présentant une conduite de signal (17a, 17b, 17c, 17d, 17 e, 17g, 17h) et au moins une conduite écran (19a, 19b, 19c, 19d, 19 e, 19f, 19g, 19h),
**caractérisé par** :
- un premier condensateur (21 a, 21 b, 21c, 21 e, 21g) introduit dans la conduite de signal (17a, 17b, 17c, 17d, 17e, 17g, 17h) pour effectuer une séparation galvanique de la conduite de signal (17a, 17b, 17c, 17d, 17e, 17g, 17h),
et par :
- un deuxième condensateur (23a, 23b, 23c, 23 e, 23g) introduit dans au moins une première conduite écran (19a, 19b, 19c, 19d, 19 e, 19f, 19g, 19h) pour effectuer la séparation galvanique de chaque conduite écran (19a, 19b, 19c, 19d, 19^{e}, 19f, 19g, 19h).

2. Appareil de mesure du niveau de remplissage fonctionnant avec des micro-ondes, selon la revendication 1, dans lequel:
- la conduite pour micro-ondes (3) est une conduite coplanaire disposée sur un premier côté d'une platine (15),
-- une conduite écran (19a) étant disposée sur chaque côté de la conduite de signal (17a), et
- le premier et le deuxième condensateur (21a, 23a) étant des éléments de construction disposés sur le premier côté de la platine (15).

3. Appareil de mesure du niveau de remplissage fonctionnant avec des micro-ondes, selon la revendication 2, dans lequel :
- la conduite pour micro-ondes (3) est une conduite à microruban disposée sur une platine (15),
-- où une conduite de signal (17b) et un premier condensateur (21 b) sont disposés sur un premier côté de la platine (15) et
-- où au moins une conduite écran (19b) et au moins un deuxième condensateur (23b) sont disposés sur un deuxième côté opposé au premier côté de la platine (15).

4. Appareil de mesure du niveau de remplissage fonctionnant avec des micro-ondes, selon la revendication 1, dans lequel :
- la conduite pour micro-ondes (3) est une conduite coplanaire disposée sur une platine (15),
-- pour laquelle on a disposé à chaque fois une conduite écran (19c, 19d) sur chaque côté de la conduite de signal (17c, 17d),
-- présentant une première section (I) reliée au générateur (1),
--- où la conduite de signal (17c) et les conduites écran (19c) sont disposées sur un premier côté de la platine (15), et
-- présentant une deuxième section (II) reliée à l'antenne (7),
--- où la conduite de signal (17d) et les conduites écran (19d) sont disposées sur un deuxième côté du premier côté opposé au côté de la platine (15),
- où la première et la deuxième section (I, II) de la conduite pour micro-ondes se chevauchent,
- où le premier condensateur (21c) est formé par des zones se chevauchant des conduites de signal (17c, 17d) de la première et de la deuxième section (I, II) et une zone de la platine (15) se trouvant entre, et
- où les deuxièmes condensateurs (23c) sont formés par des zones se chevauchant des conduites écran (19c, 19d) de la première et de la deuxième section (I, II) et des zones de la platine (15) se trouvant entre.

5. Appareil de mesure du niveau de remplissage fonctionnant avec des micro-ondes, selon la revendication 1, dans lequel :
- la conduite pour micro-ondes (3) présente une première section (I),
-- où la conduite pour micro-ondes (3) est une conduite coplanaire disposée sur une platine (15),
-- une conduite de signal (17^{e}) étant disposée sur un premier côté de la platine (15) et une conduite écran (19^{e}) étant disposée sur chaque côté de la conduite de signal (17^{e}),
- la conduite pour micro-ondes (3) une première section (III),
-- la conduite pour micro-ondes (3) étant une conduite à microruban,
--- présentant une conduite de signal (17e) s'étendant sur le premier côté de la platine (15) et au moins une conduite écran (19f) disposée sur un deuxième côté opposé au côté de la platine (15),
- où la première et la deuxième section (I, II) de la conduite pour micro-ondes se chevauchent,
- où le premier condensateur (21 e) est disposé sur le premier côté de la platine (15),
- où les deuxièmes condensateurs (23 e) sont formés par des zones se chevauchant des conduites écran (19e, 19f) de la première et de la deuxième section (I, II) et des zones de la platine (15) se trouvant entre, et
- où la première section (I) est reliée avec l'antenne (7) et la deuxième section (II) est reliée avec le générateur (1) ou à l'inverse, la deuxième section (II) est reliée avec l'antenne (7) et la première section (I) est reliée avec le générateur (1).

6. Appareil de mesure du niveau de remplissage fonctionnant avec des micro-ondes, selon la revendication 1, dans lequel :
- la conduite pour micro-ondes (3) est une conduite coaxiale,
- qui présente une première section (I) reliée avec le générateur (1) et une deuxième section (II) reliée à l'antenne (7),
- une plaque (33) composée d'un isolateur étant disposée entre la première et la deuxième section (I, II),
- le premier condensateur (21 g) présentant deux électrodes (35, 37) disposées de manière à se faire face à chaque fois au milieu de la plaque (33),
-- parmi lesquelles une électrode (35) orientée vers le générateur est reliée avec la conduite de signal (17g) de la première section (I) et une électrode (37) orientée vers une antenne est reliée avec la conduite de signal (17h) de la deuxième section (II) de la conduite pour micro-ondes (3), et
- le deuxième condensateur (23g) présentant deux électrodes (39, 41) annulaires disposées l'une en face de l'autre à chaque fois sur un bord extérieur de la plaque (33),
-- parmi lesquelles une électrode (39) annulaire orientée vers le générateur est reliée avec la conduite de signal (19g) de la première section (I) et une électrode (41) annulaire orientée vers une antenne est reliée avec la conduite écran (19h) de la deuxième section (II) de la conduite pour micro-ondes (3).

7. Appareil de mesure du niveau de remplissage fonctionnant avec des micro-ondes, selon la revendication 6, dans lequel un espace creux (45) situé entre la conduite écran (19g) et la conduite de signal (17g) de la deuxième section (II) de la conduite pour micro-ondes (3) est rempli d'un isolateur, notamment de verre.
